# EUROPEAN PATENT APPLICATION

(11) **EP 3 986 061 A1**
(43) Date of publication of application: **20.04.2022**
(21) Application number: 20875827.6
(22) Date of filing: 11.09.2020
(51) Int. Cl.: H04W 72/04

(54) **METHOD FOR SUPPRESSING CELL CO-CHANNEL INTERFERENCE, AND BASE STATION AND SYSTEM**

(30) Priority: 18.10.2019 CN 201910994327
(71) Applicant: ZTE Corporation, Shenzhen, Guangdong 518057 (CN)
(72) Inventor: ZENG, Yuyou, Shenzhen, Guangdong 518057 (CN)
(74) Representative: Raynor, Simon Mark
(86) International application number: PCT/CN2020/114851
(87) International publication number: WO 2021/073329

(57) **Abstract**

The present disclosure belongs to the field of communications technology, and specifically discloses a method for suppressing co-channel interference for a cell. The method includes: allocating a carrier frequency band for a terminal according to a resource allocation strategy based on a physical cell identifier of the cell; where according to the resource allocation strategy, a frequency band resource of the cell is divided into n frequency domain bands, n is an integer greater than or equal to two, and a resource allocation sequence is specified in the resource allocation strategy. The present disclosure further provides a base station, a communication system, an electronic device and a computer-readable medium.

## Description

### CROSS REFERENCE TO RELATED APPLICATIONS

The present application is filed based on a Chinese patent application No. 201910994327.8, filed October 18, 2019, and claims priority to this Chinese patent application, which is incorporated by reference herein in its entirety.

### TECHNICAL FIELD

The present disclosure relates to the field of mobile communication technology, in particular to a method for suppressing co-channel interference for a cell, a base station and a system.

### BACKGROUND

Compared with the 4th generation (4G) mobile communication, the 5th generation (5G) mobile communication uses higher frequency points, which causes stronger electromagnetic interference. At the same time, in order to achieve greater capacity and improve spectrum utilization, multiplexing of frequencies is applied between cells. However, a 5G cell has a smaller coverage, and greater frequency multiplexing coefficient, therefore co-channel interference problems are caused in both an edge area and a center area of the cell.

At present, the anti-co-channel interference technologies include partial frequencies multiplexing technology and soft frequencies multiplexing technology. These two technologies can improve the signal-to-interference ratio of user signals by planning the bandwidth and power of the system, thereby reducing the interference in the edge area of the cell to a certain extent, but neither of these two technologies can reduce the co-channel interference in the central area. Moreover, both the partial frequencies multiplexing technology and the soft frequencies multiplexing technology need to identify user attributes, and the frequency bands in the central area and the edge area cannot be multiplexed. In response to the user distribution changing, the frequency band resources may be wasted.

### SUMMARY

Therefore, the present disclosure provides a method for suppressing co-channel interference for a cell, a base station and a system.

The present disclosure provides a method for suppressing the co-channel interference for a cell, which includes: allocating an available carrier frequency band for a terminal according to a resource allocation strategy based on a physical cell identifier of the cell; where according to the resource allocation strategy, a frequency band resource of the cell is divided into n frequency domain bands, n is an integer greater than or equal to two, and a resource allocation sequence is specified in the resource allocation strategy.

The present disclosure provides a base station, which includes: a storage module, configured to store a resource allocation strategy, according to the resource allocation strategy, a frequency band resource of a cell is divided into n frequency domain bands and a resource allocation sequence is specified in the resource allocation strategy, n is an integer greater than or equal to 2; and a resource allocation module, configured to allocate an available carrier frequency band for a terminal according to the resource allocation strategy based on a physical cell identifier of the cell.

The present disclosure provides a communication system, which includes: a background server, configured to configure a physical cell identifier and a resource allocation strategy for a cell; and the base station provided in the embodiments of the present disclosure, configured to allocate a carrier frequency band for a terminal.

The present disclosure provides an electronic device, which includes one or more processors; and a storage device configured to store one or more programs. In response to the one or more programs being executed by the one or more processors, the one or more processors implement the method provided according to the embodiments of the present disclosure.

The present disclosure provides a computer-readable medium configured to store a computer program. In response to the computer program being executed by a processor, the method provided according to the embodiments of the present disclosure is implemented.

### BRIEF DESCRIPTION OF THE DRAWINGS

The accompanying drawings are used to provide a further understanding of the present disclosure, and constitute a part of the description. Together with the embodiments of the present disclosure below, the accompanying drawings are used to explain the present disclosure, and do not constitute a limitation on the present disclosure.
FIG. 1 is a flow chart of a method for suppressing co-channel interference for a cell provided by embodiments of the present disclosure.
FIG. 2 is a schematic diagram of a co-channel band isolation for adjacent cells according to the method for suppressing the co-channel interference for the cell provided by the embodiments of the present disclosure.
FIG. 3 is a planning diagram of a starting position of resource allocation and a resource allocation sequence according to the method for suppressing the co-channel interference for the cell provided by the embodiments of the present disclosure.
FIG. 4 is a block diagram of a base station provided by an embodiment of the present disclosure.
FIG. 5 is a block diagram of a resource allocation module in the base station provided by an embodiment of the present disclosure.
FIG. 6 is a block diagram of another type of resource allocation module in the base station provided by an embodiment of the present disclosure.

### DETAILED DESCRIPTION

The specific embodiments of the present disclosure will be described in detail below with reference to the accompanying drawings. It should be understood that the specific embodiments described herein are only used to illustrate and explain the present disclosure, and are not used to limit the present disclosure.

A method for suppressing co-channel interference for a cell provided by some embodiments of the present disclosure can realize allocation of different frequency bands for the data signals sent by co-channel cells in a mobile communication network. In this way, the co-channel interference can be reduced or avoided.

In an embodiment, the method for suppressing the co-channel interference for the cell lies in: dividing a frequency band resource of a cell into n frequency domain bands according to a resource allocation strategy, herein n is an integer greater than or equal to 2; specifying a resource allocation sequence in the resource allocation strategy; and allocating an available carrier frequency band for a terminal according to the resource allocation strategy based on a physical cell identifier of the cell

According to the method for suppressing the co-channel interference for the cell provided by the embodiments of the present disclosure, the frequency band resource of the cell is divided into the n frequency domain bands, and the carrier frequency band is allocated for the terminal according to the resource allocation sequence based on the physical cell identifier of the cell, so that data sent between the co-channel cells are in different carrier frequency bands. Thus, not only a terminal in an edge area of the cell can be free from the co-channel interference, but also the co-channel interference for a terminal in a central area of the cell can be suppressed. In this way, the communication performance can be improved and a bit error rate can be reduced, thereby improving the network quality of operators and further improving the user experience. Furthermore, the frequency band resource is divided into the n frequency domain bands, and the resource allocation sequence is specified at the same time. In this way, frequency sharing and a balance of load can be realized in both the central area and the edge area of the cell, thereby the waste of the frequency band resource can be avoided.

In order to better understand the present disclosure, the method for suppressing the co-channel interference for the cell is described in detail below, taking a 5G mobile communication network as an example.

It should be noted that in the 5G mobile communication network, the physical cell identifier (PCI) of the cell is planned and configured and the resource allocation strategy is set in background, that is, the resource allocation strategy for a downlink traffic channel and an uplink traffic channel, i.e. a "cell coordination" strategy, is added to the background configuration parameters, and then the resource allocation strategy and the PCI are laid in a 5G cellular base station and are saved.

In an embodiment, the 5G cellular base station includes nine physical cells, each of which corresponds to a PCI. For example, a PCI of a physical cell 1 is 1, a PCI of a physical cell 2 is 2, and so on.

In the resource allocation strategy according to an embodiment, the frequency band resource is divided into the n frequency domain bands. The 5G cellular base station may determine a physical cell according to the location of the terminal, and search a designated frequency domain band based on the physical cell identifier to obtain an idle carrier frequency band and allocate the idle carrier frequency band for the terminal.

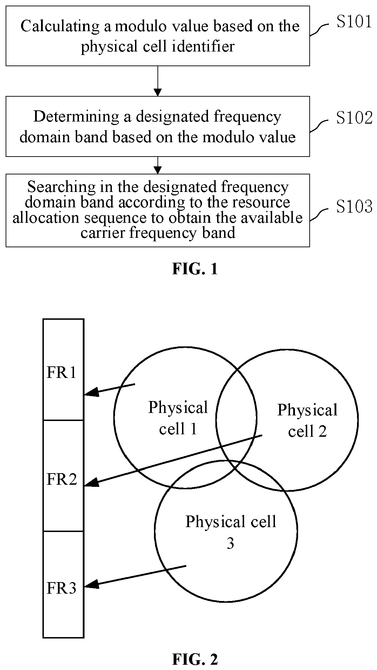

FIG. 1 is a flow chart of a method for suppressing co-channel interference for a cell provided by an embodiment of the present disclosure. The method for suppressing the co-channel interference for the cell includes the following operations.

In operation S101, a modulo value is calculated based on the physical cell identifier.

It should be noted that the physical cell identifier may be determined according to a resource request of the terminal. That is, a physical cell where the terminal is located is determined through the resource request of the terminal, and the physical cell identifier is determined based on the physical cell. Then the modulo value is calculated based on the physical cell identifier. Herein, the modulo value is related to the type of interference. For example, for a modulo-three interference, a modulo-three value is calculated. For a modulo-six interference, a modulo-six value is calculated. The calculation method of the modulo value is the same as the existing calculation method, and will not be repeated here.

It should be noted that the location of the terminal may be determined according to the request of the terminal, or may be determined by other methods capable of determining the location of the terminal.

In operation S102, a designated frequency domain band is determined based on the modulo value.

Herein, the designated frequency domain band is a frequency domain band in the frequency band resource of the cell, and the designated frequency domain band is a frequency domain band preferentially allocated to the PCI. In an embodiment, the PCI has a corresponding relationship with the designated frequency domain band, thus the frequency band resources with co-channel interference of adjacent cells are isolated. The designated frequency domain band is determined by the modulo value of the PCI. In addition, the corresponding relationship between the PCI and the designated frequency domain band may be preset.

In an embodiment, the modulo-three values (PCI%3) are calculated to be 0, 1, and 2, and it is assumed that the frequency band resource of the cell is divided into three frequency domain bands FR1, FR2 and FR3. As shown in FIG. 2, a modulo-three value of a physical cell 1 with a PCI of 1 is 0, and a corresponding designated frequency domain band is FR1. A modulo-three value of a physical cell 2 with a PCI of 2 is 1, and a corresponding designated frequency domain band is FR2. A modulo-three value of a physical cell 3 with a PCI of 3 is 2, and a corresponding designated frequency domain band is FR3.

In operation S103, searching is performed in the designated frequency domain band according to the resource allocation sequence to obtain the available carrier frequency band.

Herein, the resource allocation sequence is the sequence of searching for an available idle frequency band resource in the designated frequency domain band. For example, the available idle frequency band resource can be searched for from a low frequency to a high frequency, or from the high frequency to the low frequency.

In an embodiment, the resource allocation sequence may be preset in the resource allocation strategy. In another embodiment, in the resource allocation strategy, not only the resource allocation sequence is set, but also a starting position of resource allocation is specified. When searching for the available carrier frequency band, the search starts from the starting position.

Searching in the designated frequency domain band according to the resource allocation sequence to obtain the available carrier frequency band specifically includes: determining a starting position of the searching according to a frequency domain corresponding to the designated frequency domain band; and searching in the designated frequency domain band from the starting position according to the resource allocation sequence to obtain the available carrier frequency band.

In an embodiment, the starting position of resource allocation is related to the designated frequency domain band. Specifically, in response to determining that the designated frequency domain band corresponds to a low frequency domain band of the frequency band resource of the cell, determining the starting position as a low frequency point of the designated frequency domain band. In response to determining that the designated frequency domain band corresponds to a high frequency domain band of the frequency band resource of the cell, determining the starting position as a high frequency point of the designated frequency domain band. In response to determining that the designated frequency domain band corresponds to a middle frequency domain band of the frequency band resource of the cell, determining the starting position as the high frequency point or the low frequency point of the designated frequency domain band.

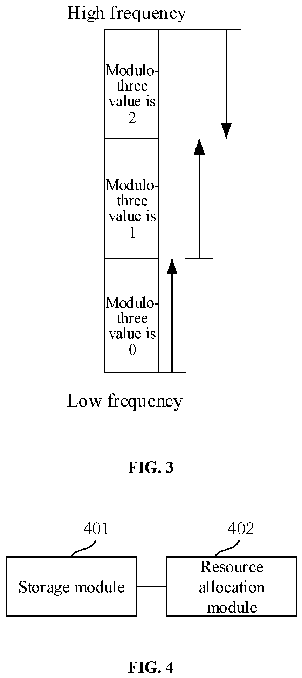

FIG. 3 is a planning diagram of the starting position of the resource allocation and the resource allocation sequence according to the method for suppressing the co-channel interference for the cell provided by this embodiment. As shown in FIG. 3, the frequency band resource of the cell is divided into three frequency domain bands, namely, a frequency domain band FR1, a frequency domain band FR2 and a frequency domain band FR3. It is assumed that according to the resource allocation sequence, the designated frequency domain band FR1 is set to correspond to a cell with a modulo-three value of 0, the designated frequency domain band FR2 is set to correspond to a cell with a modulo-three value of 1 and the designated frequency domain band FR2 is set to correspond to a cell with a modulo-three values of 2. For the frequency domain band FR1, the starting position is a low frequency point of the frequency domain band FR1, and the search is performed from the low frequency point to the high frequency point to obtain the available carrier frequency band. For the frequency domain band FR2, the starting position may be a low frequency point of the frequency domain band FR2, that is, at 1/k of the carrier frequency band of the cell, and the search is performed from the low frequency point to the high frequency point to obtain the available carrier frequency band. Herein, the 1/k is a boundary between the frequency domain band FR1 and the frequency domain band FR2. For the frequency domain band FR2, the starting position may be a high frequency point of the frequency domain band FR2, that is, at 2/k of the carrier frequency band of the cell, and the search is performed from the high frequency point to the low frequency point to obtain the available carrier frequency band. Herein, the 2/k is a boundary of the frequency domain band FR2 and the frequency domain band FR3. For the frequency domain band FR3, the starting position is a high frequency point of the frequency domain band FR3, and the search is performed from the high frequency point to the low frequency point to obtain the available carrier frequency band.

It should be noted that, in this embodiment, the frequency band resource of the cell is equally divided by the frequency domain band FR1, the frequency domain band FR2 and the frequency domain band FR3. Therefore, the value of k is 3. Correspondingly, the starting position of the frequency domain band FR2 may be one third of the frequency band resource of the cell.

It should be pointed out that in response to the frequency band resource of the cell being divided into the n frequency domain bands, a bandwidth of each of the n frequency domain bands may be determined according to the number of terminals, that is, the bandwidth of each frequency domain band is adjustable. Specifically, in response to the terminals being evenly distributed, the bandwidth of each frequency domain band is equal. In response to the terminals being unevenly distributed, the bandwidths of the frequency domain bands are determined according to the number of terminals. That is, in response to the number of terminals in a coverage area of the cell being large, the bandwidth of the corresponding frequency domain band is wide, and conversely, the bandwidth of the corresponding frequency domain band is narrow.

For example, in response to the number of terminals in a coverage area of a cell with a physical cell identifier of 1 being large, a bandwidth of the corresponding frequency domain band FR1 is large. In response to the number of terminals in a coverage area of a cell with a physical cell identifier of 3 being small, a bandwidth of the corresponding frequency domain band FR3 is small.

In this embodiment, since the frequency band resource of the cell is divided into the n frequency domain bands, the frequency band resource is cut and mapped to cells, and the carrier frequency bands are allocated according to the physical cell identifier of the cells and the resource allocation strategy. Thus, even if there are multiple terminals in an overlapping area of adjacent cells, different terminals can use different carrier frequency bands to avoid overlapping of the carrier frequency bands, thereby preventing the terminals from co-channel interference. Moreover, co-channel sharing and a balance of load can be realized in both the edge area and the center area of the cell, thereby the waste of the frequency band resource can be avoided.

It should be noted that, due to the wide frequency band resource of the 5G communication network, the 5G communication network can be fully applicable to the low-load application scenarios, that is, the co-channel interference can be avoided while the load balance can be ensured at a low load. In high-load application scenarios, especially those where the terminals are intensively distributed, in response to the idle resources that meet the resource request of the terminals not being searched in the designated frequency domain band, the limitation to the designated frequency domain band may be broken, and the idle carrier frequency bands can be searched for in other frequency domain bands, so as to avoid the defect that the terminals cannot access communication services.

In an embodiment, when searching in the designated frequency domain band according to the resource allocation sequence, but no available frequency band resource is found (the designated frequency domain band being occupied), searching can be performed in the frequency domain bands adjacent to the designated frequency domain band until the available carrier frequency band is obtained. For example, when the terminals being intensively distributed in an area with a physical cell identifier of 1, the service load in the frequency domain band FR1 is heavy, resulting in no carrier frequency band in the frequency domain band FR1 is idle and available. Searching may be performed in a higher frequency domain band, that is, searching is performed in the frequency domain band FR2 to obtain the available carrier frequency band, thereby ensuring the normal scheduling of services. Similarly, when the terminals being intensively distributed in an area with a physical cell identifier of 2, the service load in the frequency domain band FR2 is heavy, resulting in no carrier frequency band in the frequency domain band FR2 is idle and available. Searching may be performed in a lower frequency domain band or in a higher frequency domain band, that is, searching is performed in the frequency domain band FR1 or in the frequency domain band FR3, until the available idle carrier frequency band is found.

It is not difficult to understand that in this embodiment, the frequency band resource of the cell is divided into multiple frequency domain bands, and the bandwidth of the frequency band resource of the cell is not limited. After ensuring that each cell preferentially obtains the available carrier frequency bands in the designated frequency domain bands, and considering the nonuniformity of the cell loads, the available carrier frequency bands can be obtained from other frequency domain bands, so as to ensure the normal communicate of the terminals and to avoid the co-channel interference.

The method for suppressing the co-channel interference for the cell provided by this embodiment requires no complicated function settings and static planning, and does not need to consider the information feedback of users. Only the addition of a logic processing in the 5G cellular base station can realize the allocation of carrier frequency domains and avoiding of the co-channel interference. In this way, the capacity of the cell is ensured to not be affected, and the utilization efficiency and service quality of the frequency band resource is improved.

In an embodiment, before the operation S101, the method further includes: receiving a resource request from the terminal, and determining a bandwidth of the frequency band resource required to be provided based on the resource request.

Herein, the resource request sent by the terminal includes the location of the terminal and the required bandwidth. The 5G cellular base station determines the physical cell by the location of the terminal, and then determines the physical cell identifier based on the physical cell. The bandwidth required by the terminal may be determined according to the resource request of the terminal. For example, in response to the resource request of the terminal being a voice call, the required bandwidth is relatively small. In response to the resource request of the terminal being browsing a web page, the required bandwidth is relatively large.

After receiving the resource request of the terminal, the 5G cellular base station searches in the designated frequency domain band according to the resource allocation strategy, and searches for the idle carrier frequency band that meets the resource request of the terminal. In response to an idle carrier frequency band being found, but the idle carrier frequency band not meeting the resource request of the terminal, the idle carrier frequency band is determined to be unavailable, and the search continues.

It should be noted that the method for suppressing the co-channel interference for the cell provided by this embodiment is not only applicable to the allocation of frequency band resources of different cells in a base station, but also applicable to the allocation of frequency band resources of different base stations., In other words, the method for suppressing the co-channel interference for the cell provided by this embodiment is applicable to the allocation of frequency band resources across base stations, and can avoid the co-channel interference.

The method for suppressing the co-channel interference for the cell provided in this embodiment allocates the carrier frequency band for the terminal according to the resource allocation strategy based on the resource request of the terminal and the physical cell identifier of the cell., Thus, not only the terminal in the edge area of the cell can be free from the co-channel interference, but also the co-channel interference for the terminal in the central area of the cell can be suppressed. In this way, the communication performance can be improved and a bit error rate can be reduced, thereby improving the network quality of operators and further improving the user experience. Furthermore, the frequency band resource is divided into the n frequency domain bands, and the resource allocation sequence is specified at the same time. In this way, frequency sharing and a balance of load can be realized in both the central area and the edge area of the cell, thereby the waste of the frequency band resource can be avoided.

The operations set in the above-described methods only aim to make the description clearer. In implementation, the operations may be combined into one or one operation may be divided into multiple operations, which all fall into the protection scope of the present disclosure as long as the same logical relationship is included. Such a trivial amendment or design added to an algorithm or procedure as not changing a central design of the algorithm or the procedure falls into the protection scope of the disclosure.

The present disclosure further provides a base station, which allocates a carrier frequency band for a terminal. As shown in FIG. 4, the base station includes:

a storage module 401, configured to store a resource allocation strategy. The resource allocation strategy comes from a background server. After configuring a PCI and the resource allocation strategy of each cell, the background server transmits the PCI and the resource allocation strategy of each cell to the base station. The base station stores the PCI and the resource allocation strategy of each cell. According to the resource allocation strategy, a frequency band resource of a cell is divided into n frequency domain bands and a resource allocation sequence is specified in the resource allocation strategy, where n is an integer greater than or equal to 2; and

a resource allocation module 402, configured to allocate the carrier frequency band for the terminal according to the resource allocation strategy based on the physical cell identifier of the cell.

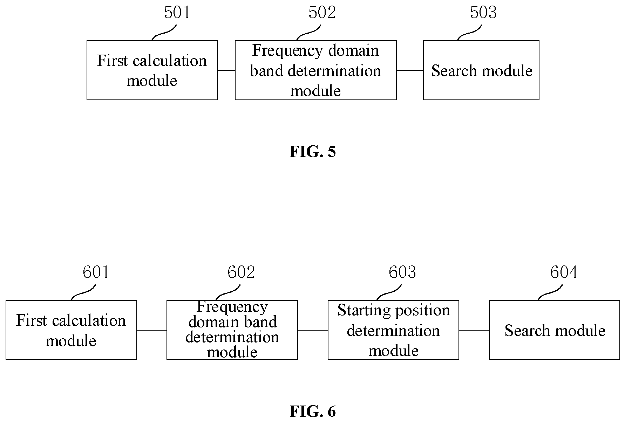

In an embodiment, as shown in FIG. 5, the resource allocation module includes the following modules.

A first calculation module 501 which is configured to calculate a modulo value based on the physical cell identifier.

Herein, the modulo value is related to the type of interference. For example, for a modulo-three interference, a modulo-three value is calculated. For a modulo-six interference, a modulo-six value is calculated. The calculation method of the modulo value is the same as the existing calculation method, and will not be repeated here.

A frequency domain band determination module 502 which is configured to determine a designated frequency domain band based on the modulo value.

Herein, the designated frequency domain band is a frequency domain band in the frequency band resource of the cell, and the designated frequency domain band is a frequency domain band preferentially allocated to the PCI. In an embodiment, the PCI has a corresponding relationship with the designated frequency domain band, thus the frequency band resources with co-channel interference of adjacent cells are isolated. The designated frequency domain band is determined by the modulo value of the PCI. In addition, the corresponding relationship between the PCI and the designated frequency domain band may be preset.

In an embodiment, the modulo-three values (PCI%3) are calculated to be 0, 1, and 2. It is assumed that the frequency band resource of the cell is divided into three frequency domain bands FR1, FR2 and FR3. A modulo-three value of a physical cell with a PCI of 1 is 0, and a corresponding designated frequency domain band is FR1. A modulo-three value of a physical cell with a PCI of 2 is 1, and a corresponding designated frequency domain band is FR2. A modulo-three value of a physical cell with a PCI of 3 is 2, and a corresponding designated frequency domain band is FR3.

A search module 503 which is configured to search in the designated frequency domain band according to the resource allocation sequence to obtain an available carrier frequency band.

Herein, the resource allocation sequence is the sequence of searching for an available idle frequency band resource in the designated frequency domain band. For example, the available idle frequency band resource can be searched for from a low frequency to a high frequency, or from the high frequency to the low frequency.

In an embodiment, as shown in FIG. 6, the resource allocation module includes a first calculation module 601, a frequency domain band determination module 602, a starting position determination module 603, and a search module 604, where the functions of the first calculation module 601, the frequency domain band determination module 602, and the search module 604 are basically the same as the functions of the first calculation module 501, the frequency domain band determination module 502, and the search module 503. Only the different parts will be described in detail below.

The starting position determination module 603 is configured to determine a starting position of the searching according to a frequency domain corresponding to the designated frequency domain band.

With the starting position determination module 603, in response to determining that the designated frequency domain band corresponds to a low frequency domain band of the frequency band resource of the cell, determining the starting position as a low frequency point of the designated frequency domain band. In response to determining that the designated frequency domain band corresponds to a high frequency domain band of the frequency band resource of the cell, determining the starting position as a high frequency point of the designated frequency domain band. In response to determining that the designated frequency domain band corresponds to a middle frequency domain band of the frequency band resource of the cell, determining the starting position as the high frequency point or the low frequency point of the designated frequency domain band.

For example, the frequency band resource of the cell is divided into three frequency domain bands, namely, a frequency domain band FR1, a frequency domain band FR2 and a frequency domain band FR3. It is assumed that according to the resource allocation sequence, the designated frequency domain band FR1 is set to correspond to a cell with a modulo-three value of 0, the designated frequency domain band FR2 is set to correspond to a cell with a modulo-three value of 1 and the designated frequency domain band FR2 is set to correspond to a cell with a modulo-three values of 2. For the frequency domain band FR1, the starting position is a low frequency point of the frequency domain band FR1, and the search is performed from the low frequency point to the high frequency point to obtain the available carrier frequency band. For the frequency domain band FR2, the starting position may be a low frequency point of the frequency domain band FR2, that is, at 1/k of the carrier frequency band of the cell, and the search is performed from the low frequency point to the high frequency point to obtain the available carrier frequency band. Herein, the 1/k is a boundary between the frequency domain band FR1 and the frequency domain band FR2. For the frequency domain band FR2, the starting position may be a high frequency point of the frequency domain band FR2, that is, at 2/k of the carrier frequency band of the cell, and the search is performed from the high frequency point to the low frequency point to obtain the available carrier frequency band. Herein, the 2/k is a boundary of the frequency domain band FR2 and the frequency domain band FR3. For the frequency domain band FR3, the starting position is a high frequency point of the frequency domain band FR3, and the search is performed from the high frequency point to the low frequency point to obtain the available carrier frequency band.

It should be noted that, in this embodiment, the frequency band resource of the cell is equally divided by the frequency domain band FR1, the frequency domain band FR2 and the frequency domain band FR3. Therefore, the value of k is 3. Correspondingly, the starting position of the frequency domain band FR2 may be one third of the frequency band resource of the cell.

In an embodiment, the bandwidth of each of the frequency domain bands is adjustable. Specifically, in response to the terminals being evenly distributed, the bandwidth of each of the frequency domain bands is equal. In response to the terminals being unevenly distributed, the bandwidths of the frequency domain bands are determined according to the number of terminals. That is, in response to the number of terminals in a coverage area of the cell being large, the bandwidth of the corresponding frequency domain band is wide, and conversely, the bandwidth of the corresponding frequency domain band is narrow.

For example, in response to the number of terminals in a coverage area of a cell with a physical cell identifier of 1 being large, a bandwidth of the corresponding frequency domain band FR1 is large. In response to the number of terminals in a coverage area of a cell with a physical cell identifier of 3 being small, a bandwidth of the corresponding frequency domain band FR3 is small.

In an embodiment, with the search module 703, in response to the frequency domain band corresponding to the designated frequency domain band being occupied, searching is performed in the frequency domain bands adjacent to the designated frequency domain band until the available carrier frequency band is obtained.

For example, when searching in the designated frequency domain band according to the resource allocation sequence, but no available frequency band resource is found (the designated frequency domain band being occupied), searching can be performed in the frequency domain bands adjacent to the designated frequency domain band until the available carrier frequency band is obtained. For example, when the terminals being intensively distributed in an area with a physical cell identifier of 1, the service load in the frequency domain band FR1 is heavy, resulting in no carrier frequency band in the frequency domain band FR1 is idle and available. Searching may be performed in a higher frequency domain band, that is, searching is performed in the frequency domain band FR2 to obtain the available carrier frequency band, thereby ensuring the normal scheduling of services. Similarly, when the terminals being intensively distributed in an area with a physical cell identifier of 2, the service load in the frequency domain band FR2 is heavy, resulting in no carrier frequency band in the frequency domain band FR2 is idle and available. Searching may be performed in a lower frequency domain band or in a higher frequency domain band, that is, searching is performed in the frequency domain band FR1 or in the frequency domain band FR3, until the available idle carrier frequency band is found.

In an embodiment, the base station further includes a receiving module configured to receive a resource request from the terminal. The resource allocation module further includes a second calculation module configured to determine the amount of frequency band resources to be allocated based on the resource request.

It should be noted that the resource request sent by the terminal includes the location of the terminal and the required bandwidth. The 5G cellular base station determines the physical cell by the location of the terminal, and then determines the physical cell identifier based on the physical cell. The bandwidth required by the terminal may be determined according to the resource request of the terminal. For example, in response to the resource request of the terminal being a voice call, the required bandwidth is relatively small. In response to the resource request of the terminal being browsing a web page, the required bandwidth is relatively large.

Based on the resource request of the terminal and the physical cell identifier of the cell, the base station provided by the present disclosure allocates the carrier frequency band for the terminal according to the resource allocation strategy. In addition, according to the resource allocation strategy, the frequency band resource of the cell is divided into the n frequency domain bands, and the resource allocation sequence is specified at the same time. so that data sent between the co-channel cells are in different carrier frequency bands. Thus, not only a terminal in an edge area of the cell can be free from the co-channel interference, but also the co-channel interference for a terminal in a central area of the cell can be suppressed. In this way, the communication performance can be improved and a bit error rate can be reduced, thereby improving the network quality of operators and further improving the user experience. Furthermore, the frequency band resource is divided into the n frequency domain bands, and the resource allocation sequence is specified at the same time. In this way, frequency sharing and a balance of load can be realized in both the central area and the edge area of the cell, thereby the waste of the frequency band resource can be avoided.

It should be noted that all the modules involved in this embodiment are logic modules. In practical applications, a logic unit may be a physical unit, a part of a physical unit, or a combination of multiple physical units. In addition, in order to highlight the innovative part of the present disclosure, this embodiment does not introduce a unit that is not closely related to solving the technical problems raised in the present disclosure, which does not indicate that there are no other units in this embodiment.

The present disclosure further provides a communication system, which includes a background server and a base station, where the background server is configured to configure a physical cell identifier and a resource allocation strategy for a cell; and the base station is configured to allocate a carrier frequency band for a terminal. The base station is the base station provided in the present disclosure to implement the method for suppressing the co-channel interference for the cell provided in the present disclosure.

The present disclosure further provides an electronic device, including one or more processors; and a storage device, configured to store one or more programs. In response to the one or more programs being executed by the one or more processors, the one or more processors are enabled to implement the method for suppressing the co-channel interference for the cell provided by the present disclosure. For avoiding repeated description, the specific operations of the method for suppressing the co-channel interference for the cell are not repeated here.

The present disclosure further provides a computer-readable medium configured to store a computer program. In response to the computer program being executed by a processor, the method for suppressing the co-channel interference for the cell provided by the present disclosure is implemented. For avoiding repeated description, the specific operations of the method for suppressing the co-channel interference for the cell are not repeated here.

Those having ordinary skills in the art shall understand that all or some of the steps in the method disclosed above and the functional modules/units in the system and the apparatus can be implemented as software, firmware, hardware and an appropriate combination thereof. In the hardware implementation, division between functional modules/units mentioned in the above description does not necessarily correspond to division of physical components. For example, one physical component may have multiple functions, or one function or step may be implemented by several physical components. Some physical components or all physical components may be implemented as software executed by a processor, such as a central processing unit, a digital signal processor, or a microprocessor, or may be implemented as hardware, or may be implemented as an integrated circuit, for example, an application specific integrated circuit. Such software can be distributed on a computer-readable medium, which can include a computer storage medium (or non-transitory medium) and a communication medium (or transitory medium). As well known to those having ordinary skill in the art, the term computer storage medium includes a volatile or non-volatile, removable or irremovable medium implemented in any method or technology applied to storage information (such as a computer-readable instruction, a data structure, a computer program module or other data). The computer storage medium includes, but is not limited to, a random access memory (RAM), a read-only memory (ROM), an electrically erasable programmable read only memory (EEPROM), a flash memory or other memory technology, a compact disc read-only memory (CD-ROM), a digital versatile disc (DVD) or another optical disc memory, a magnetic box, a magnetic tape, a magnetic disc or another magnetic storage apparatus, or any other medium applicable to storing desired information and accessible by a computer. In addition, as is well known to those having ordinary skill in the art, the communication medium usually includes computer-readable instructions, data structures, program modules, or other data in a modulated data signal such as a carrier wave or other transmission mechanisms, and may include any information delivery medium.

It should be noted that in the present disclosure, the terms "include" "contain" or any other variant thereof are intended to cover a non-exclusive inclusion, such that a process, method, article, or device that includes a list of elements includes not only those elements, but also other elements not explicitly listed or inherent to such process, method, article, or device. Without further limitation, the element defined by the statement "includes a ..." does not exclude the presence of another identical element in the process, method, article or device that includes the element.

Those skilled in the art can understand that although some embodiments described herein include some features included in other embodiments rather than other features, the combination of features of different embodiments means that they fall within the scope of the present embodiment and form different embodiments.

It can be understood that the above embodiments are only exemplary embodiments used to explain the principles of the present disclosure, but the present disclosure is not limited to this. For those having ordinary skills in the art, various variations and improvements can be made without departing from the spirit and essence of the present disclosure, and these variations and improvements also fall within the protection scope of the present disclosure.

## Claims

1. A method for suppressing co-channel interference for a cell, comprising:
- allocating an available carrier frequency band for a terminal according to a resource allocation strategy based on a physical cell identifier of the cell;
- wherein according to the resource allocation strategy, a frequency band resource of the cell is divided into n frequency domain bands, n is an integer greater than or equal to two, and a resource allocation sequence is specified in the resource allocation strategy.

2. The method according to claim 1, wherein allocating the available carrier frequency band for the terminal according to the resource allocation strategy based on the physical cell identifier of the cell comprises:
- calculating a modulo value based on the physical cell identifier;
- determining a designated frequency domain band based on the modulo value; and
- searching in the designated frequency domain band according to the resource allocation sequence to obtain the available carrier frequency band.

3. The method according to claim 2, wherein searching in the designated frequency domain band according to the resource allocation sequence to obtain the available carrier frequency band comprises:
- determining a starting position of the searching according to a frequency domain band corresponding to the designated frequency domain band; and
- searching in the designated frequency domain band from the starting position according to the resource allocation sequence to obtain the available carrier frequency band.

4. The method according to claim 3, wherein determining the starting position of the searching according to the frequency domain band corresponding to the designated frequency domain band comprises:
- in response to determining that the designated frequency domain band corresponds to a low frequency domain band of the frequency band resource of the cell, determining the starting position as a low frequency point of the designated frequency domain band;
- in response to determining that the designated frequency domain band corresponds to a high frequency domain band of the frequency band resource of the cell, determining the starting position as a high frequency point of the designated frequency domain band; and
- in response to determining that the designated frequency domain band corresponds to a middle frequency domain band of the frequency band resource of the cell, determining the starting position as the high frequency point or the low frequency point of the designated frequency domain band.

5. The method according to claim 3, wherein searching in the designated frequency domain band from the starting position according to the resource allocation sequence to obtain the available carrier frequency band comprises:
- in response to the frequency domain band corresponding to the designated frequency domain band being occupied, searching infrequency domain bands adjacent to the designated frequency domain band until the available carrier frequency band is obtained.

6. The method according to claim 2, wherein before calculating the modulo value based on the physical cell identifier, the method further comprises:
- receiving a resource request of the terminal; and
- determining an amount of frequency band resources to be allocated based on the resource request.

7. The method according to any one of claims 1 to 6, wherein according to the resource allocation strategy, a bandwidth of each of the frequency domain bands is adjustable.

8. A base station, comprising:
- a storage module, configured to store a resource allocation strategy, wherein according to the resource allocation strategy, a frequency band resource of a cell is divided into n frequency domain bands and a resource allocation sequence is specified in the resource allocation strategy, wherein n is an integer greater than or equal to 2; and
- a resource allocation module, configured to allocate an available carrier frequency band for a terminal according to the resource allocation strategy based on a physical cell identifier of the cell.

9. A communication system, comprising:
- a background server, configured to configure a physical cell identifier and a resource allocation strategy for a cell; and
- the base station according to claim 8, configured to allocate a carrier frequency band for a terminal.

10. An electronic device, comprising:
- one or more processors; and
- a storage device, configured to store one or more programs, in response to the one or more programs being executed by the one or more processors, the one or more processors implement the method according to any one of claims 1 to 7.

11. A computer-readable medium, configured to store a computer program, and in response to the computer program being executed by a processor, the method according to any one of claims 1 to 7 is implemented.
